# EUROPÄISCHE PATENTSCHRIFT

(11) **EP 3 336 293 B1**
(45) Veröffentlichungstag und Bekanntmachung des Hinweises auf die Patenterteilung: **10.08.2022**
(21) Anmeldenummer: 17206944.5
(22) Anmeldetag: 13.12.2017
(51) Int. Cl.: E05F 15/622

(54) **STELLVORRICHTUNG FÜR EIN RELATIV ZU EINER KAROSSERIE EINES FAHRZEUGS BEWEGBARES FAHRZEUGTEIL**
ACTUATING DEVICE FOR A VEHICLE PART WHICH CAN BE MOVED RELATIVE TO A BODY OF A MOTOR VEHICLE
DISPOSITIF DE POSITIONNEMENT POUR UNE PIÈCE DE VÉHICULE MOBILE PAR RAPPORT À UNE CARROSSERIE D'UN VÉHICULE

(30) Priorität: 14.12.2016 DE 102016224968
(43) Veröffentlichungstag der Anmeldung: 20.06.2018
(73) Patentinhaber: Stabilus GmbH, 56070 Koblenz (DE)
(72) Erfinder: Reif, Thomas, 56330 Kobern-Gondorf (DE)
(74) Vertreter: Weickmann & Weickmann PartmbB

(56) Entgegenhaltungen:
- EP-A1- 3 225 770
- EP-A2- 2 669 458
- DE-T5-112012 003 117

## Beschreibung

Die Erfindung betrifft eine Stellvorrichtung für ein relativ zu einer Karosserie eines Fahrzeugs bewegbares Fahrzeugteil, insbesondere für eine Fahrzeugtür oder eine Fahrzeugklappe, gemäß dem Oberbegriff des Anspruchs 1.

Stellvorrichtungen der eingangs genannten Art sind aus dem Stand der Technik allgemein bekannt, beispielsweise in Form von Spindeltrieben, die zum Öffnen und Schließen von Fahrzeugtüren oder Fahrzeugklappen, beispielsweise Kofferraumklappen, Motorraumklappen, Heckklappen oder dergleichen eingesetzt werden. Bei diesen Stellvorrichtungen sind üblicherweise die beiden, beispielsweise von Kugelpfannen gebildeten, Verbindungseinheiten jeweils an dem freien Ende des Stellelements und der Antriebsbaugruppe angeordnet, d.h. an Positionen, die von jener Stelle, an der die Antriebsbaugruppe mit dem Stellelement zu dessen Verstellung zusammenwirkt bzw. an der das Stellelement aus der Antriebsbaugruppe austritt, am weitesten entfernt sind. Nachteilig ist dabei, dass diese zur Verbindung mit der Fahrzeugkarosserie bzw. dem bewegbaren Fahrzeugteil vorgesehenen Verbindungsstellen häufig nicht mit den vom Konstrukteur des Kraftfahrzeugs vorgesehenen Anlenkstellen an der Fahrzeugkarosserie bzw. dem bewegbaren Fahrzeugteil zusammenpassen und daher aufwändige Adapterkonstruktionen, beispielsweise unter Einsatz zusätzlicher Bleche hoher Steifigkeit, erforderlich sind. Diese zusätzlichen Adapterkonstruktionen verursachen nicht nur Kosten, sondern nehmen auch wertvollen Bauraum in Anspruch.

Aus dem Dokument DE 11 2012 003 117 T5, welches als nächstliegender Stand der Technik erachtet wird, ist eine Stellvorrichtung bekannt, welche eine Antriebsbaugruppe und ein Stellelement umfasst, welches relativ zu der Antriebsbaugruppe verlagerbar ist, wobei die Antriebsbaugruppe an einer von einem freien Ende der Antriebsbaugruppe entfernt gelegenen Stelle mit einer übergeordneten Baugruppe verbunden ist. Ferner sei auf das Dokument EP 2 669 458 A2 hingewiesen.

Es ist daher Aufgabe der vorliegenden Erfindung, hier Abhilfe zu schaffen.

Diese Aufgabe wird erfindungsgemäß durch eine Stellvorrichtung nach Anspruch 1 gelöst.

Die erfindungsgemäße Stellvorrichtung weist den Vorteil auf, dass der Abstand zwischen den beiden Verbindungseinheiten kürzer ist als ihre Gesamtlänge, da sich nicht, wie bei herkömmlichen Stellvorrichtungen, die gesamte Länge der Stellvorrichtung zwischen den beiden Verbindungseinheiten erstreckt. Die Position der einen Verbindungseinheit an der Antriebseinheit kann beliebig in Anpassung an Vorgaben des Konstrukteurs der Baugruppe gewählt werden. Dadurch ist es möglich, auf zusätzliche Bauteile, beispielsweise Stützbleche, zu verzichten.

An dieser Stelle sei festgehalten, dass auch die erfindungsgemäße Stellvorrichtung zum Öffnen und Schließen von Fahrzeugtüren oder Fahrzeugklappen, beispielsweise Kofferraumklappen, Motorraumklappen, Heckklappen oder dergleichen als bewegbares Fahrzeugteil eingesetzt werden kann.

Vorteilhafterweise kann die eine Verbindungseinheit an jenem Ende der Antriebsbaugruppe angeordnet sein, an welchem diese mit dem Stellelement zusammenwirkt bzw. an welchem das Stellelement aus der Antriebsbaugruppe austritt. Auf diese Weise ist es möglich, die beiden Verbindungseinheiten, d.h. die eine Verbindungseinheit und die weitere Verbindungseinheit, in einem minimalen Abstand zueinander zu positionieren.

Erfindungsgemäß verläuft die Schwenkachse der einen Verbindungseinheit zur Verstellachse des Stellelements windschief. Dies kann beispielsweise durch eine Verbindungseinheit realisiert sein, deren Schwenkachse im Wesentlichen orthogonal zur Verstellachse des Stellelements und in etwa tangential zu einem Außenrohr der Antriebseinheit verläuft.

In einer nicht-erfindungsgemäßen Alternative kann die Schwenkachse der einen Verbindungseinheit die Verstellachse des Stellelements schneiden. Dies kann insbesondere dann der Fall sein, wenn die eine Verbindungseinheit durch eine einseitig oder beidseitig an einem Außenrohr der Antriebseinheit angeordnete Verbindungseinheit ausgebildet ist, deren Schwenkachse im Wesentlichen radial zu dem Außenrohr der Antriebseinheit ausgerichtet ist.

Die Stellvorrichtung kann beispielsweise als Spindeltrieb ausgebildet sein.

Alternativ kann die Stellvorrichtung natürlich auch als hydraulisch und/oder pneumatisch betriebener Antrieb ausgebildet sein.

Erfindungsgemäß ist die eine Verbindungseinheit mit der Antriebsbaugruppe stoffschlüssig verbunden, beispielsweise verschweißt oder verklebt, oder mit dieser einstückig ausgebildet. Auf diese Weise kann auf zusätzliche Verbindungselemente verzichtet werden, so dass der erforderliche Bauraum und die Kosten der erfindungsgemäßen Stellvorrichtung weiter reduziert werden können. Insbesondere kann eine integrale Ausführung der einen Verbindungseinheit mit der Antriebsbaugruppe eine Deformation der Antriebsbaugruppe und damit Komplikationen, beispielsweise Positionierungsungenauigkeiten oder erhöhte Abnutzung, reduzieren oder gar vollständig verhindern.

Gemäß einem weiteren Gesichtspunkt betrifft die Erfindung die Verwendung einer erfindungsgemäßen Stellvorrichtung zum Verstellen eines bewegbaren Fahrzeugteils, insbesondere einer Fahrzeugtür oder einer Fahrzeugklappe, relativ zur Karosserie des Fahrzeugs.

Die Erfindung wird im Folgenden anhand von Ausführungsbeispielen mit Bezug auf die beigefügte Zeichnung näher erläutert werden. Es stellt dar:
- Figur 1: eine schematische Schnittansicht einer erfindungsgemäßen Stellvorrichtung in einem ausgefahrenen Zustand;
- Figur 2: eine schematische Schnittansicht der Stellvorrichtung aus Figur 1 in einem zurückgezogenen Zustand;
- Figur 3: eine schematische Ansicht eines Bewegungsverlaufs der Stellvorrichtung aus den Figuren 1 und 2;
- Figur 4: eine schematische Ansicht eines Bewegungsverlaufs einer erfindungsgemäßen Stellvorrichtung mit einer an der Antriebsbaugruppe mittig angeordneten Verbindungseinheit.

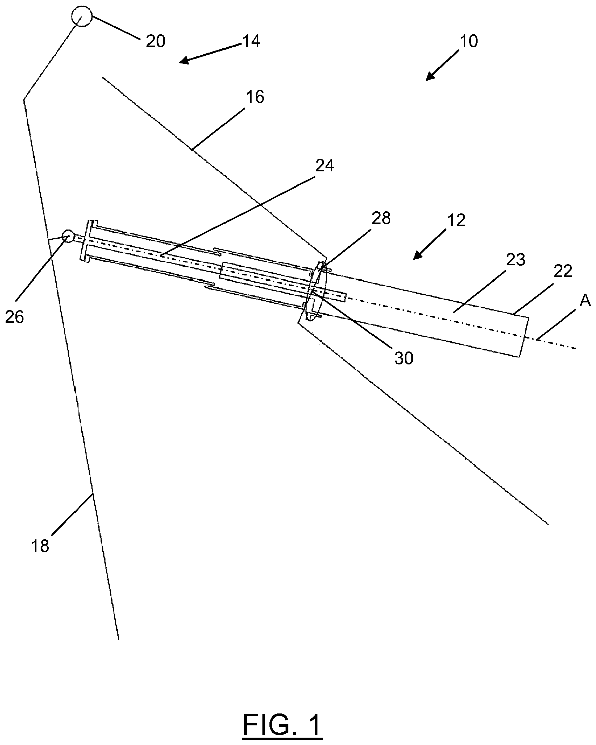

In Figur 1 ist eine Anordnung 10 einer Stellvorrichtung 12 an einer übergeordneten Baugruppe 14 dargestellt. Die übergeordnete Baugruppe 14 umfasst in der vorliegenden schematischen Darstellung ein Grundelement 16, beispielsweise eine Fahrzeugkarosserie, und ein relativ zu dem Grundelement 16 bewegliches Element 18, beispielsweise eine Heckklappe eines Fahrzeugs. Das bewegliche Element 18 ist mit dem Grundelement 16 über ein Gelenk 20 verbunden.

Die Stellvorrichtung 12 umfasst eine Antriebsbaugruppe 22 mit einer Antriebseinheit 23 (nicht gezeigt) und ein Stellelement 24. Das Stellelement 24 ist relativ zu der Antriebsbaugruppe 22 mittels der Antriebseinheit 23 entlang einer Verstellachse A axial verlagerbar, so dass ein freies Ende des Stellelements 24 von der Antriebsbaugruppe 22 weg oder auf diese zu verlagerbar ist. Die Stellvorrichtung 12 kann beispielsweise in Form eines Spindeltriebs ausgebildet sein, in dem die Antriebsbaugruppe 22 eine als Elektromotor ausgebildete Antriebseinheit 23 und eine Spindelmutter umfasst und das Stellelement 24 eine Spindel umfasst. Je nach Rotationsrichtung der Spindelmutter wird die mit der Spindelmutter in Gewindeeingriff stehende Spindel, das heißt das Stellelement 24, aus der Antriebsbaugruppe 22 heraus oder in diese hinein verlagert, so dass die Gesamtlänge der Stellvorrichtung 12 entsprechend zunimmt oder abnimmt.

An seinem freien Ende ist das Stellelement 24 mit dem beweglichen Element 18 über eine Gelenkverbindung 26, z.B. ein Kugelgelenk, verbunden.

Die Antriebsbaugruppe 22 weist an dem Ende, an dem das Stellelement 24 aus der Antriebsbaugruppe 22 tritt bzw. an dem das Stellelement 24 aus der Antriebsbaugruppe 22 austritt, eine Verbindungseinheit 28 auf. Die Verbindungseinheit 28 ist mit dem Grundelement 16 der übergeordneten Baugruppe 14 derart verbunden, dass eine Schwenkbewegung der Antriebsbaugruppe 22, d.h. der Stellvorrichtung 12, um eine Schwenkachse 30 relativ zu dem Grundelement 16 erlaubt ist.

In Figur 1 ist die Stellvorrichtung 12 in ihrer maximalen Länge dargestellt, so dass das bewegliche Element 18 relativ zu dem Grundelement 16 maximal ausgeschwenkt ist.

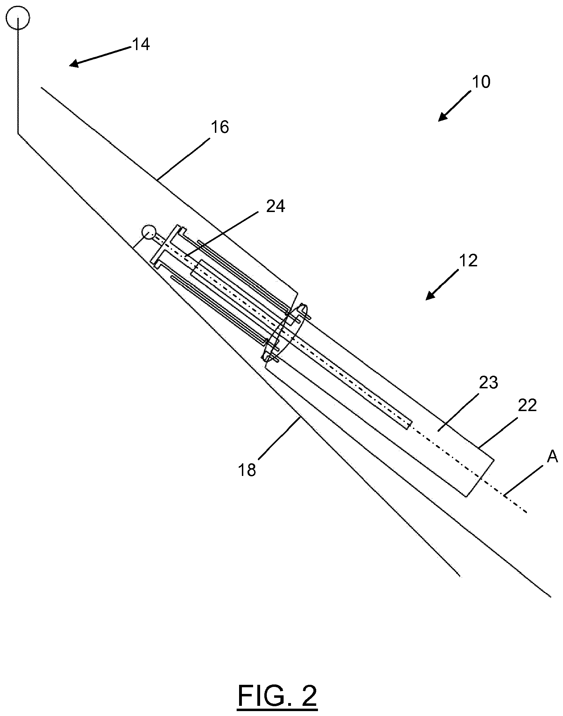

In Figur 2 ist die Stellvorrichtung 12 in einem Zustand dargestellt, in dem sie ihre minimale Länge aufweist, d.h. das Stellelement 24 ist in die Antriebsbaugruppe 22 weitest möglich zurückgezogen. Das bewegliche Element 18 ist somit relativ zu dem Grundelement 16 so nah wie möglich heran verlagert. Die Stellvorrichtung 12 kann eine hemmende oder sogar selbsthemmende Eigenschaft aufweisen, so dass eine Verlagerung des beweglichen Elements 18 relativ zu dem Grundelement 16 ohne Betätigung der Stellvorrichtung 12, das heißt der Antriebsbaugruppe 22, nicht oder nur unter hohem Kraftaufwand möglich ist.

In an sich bekannter Weise kann die Stellvorrichtung 12 auch eine kraftbegrenzende Kupplung oder/und Bremsen etc. umfassen.

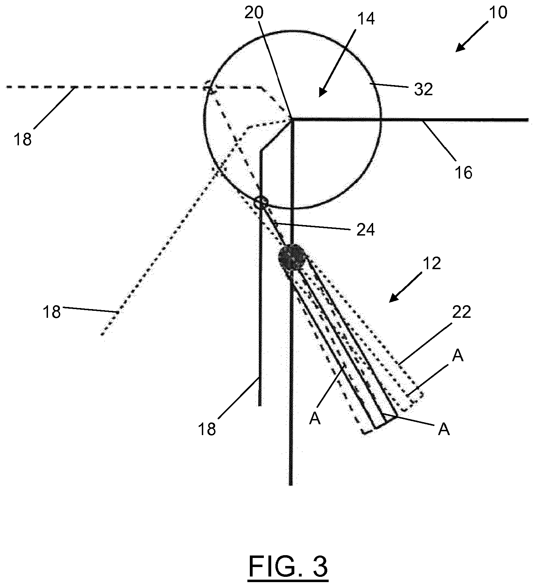

In Figur 3 ist die Anordnung 10 in den beiden Maximalstellungen aus Figur 1 und aus Figur 2 der Stellvorrichtung 12 bzw. der übergeordneten Baugruppe 14 sowie in einer Zwischenposition dargestellt.

Ausgehend von der in Figur 1 dargestellten maximal geöffneten Position des beweglichen Elements 18 relativ zu dem Grundelement 16 (siehe gestrichelte Linie), befindet sich auch das Stellelement 24 in einem weitest möglich aus der Antriebsbaugruppe 22 ausgefahrenen Zustand.

Die Ausrichtung der Stellvorrichtung 12 folgt dabei einer Geraden, welche durch die beiden Schwenkachsen der jeweiligen Verbindungseinheiten 26 und 28 bzw. 30 tritt (siehe gestrichelt dargestellte Stellvorrichtung 12).

Über eine in Figur 3 gepunktet dargestellte Zwischenposition des beweglichen Elements 18 und der Stellvorrichtung 12 wird das bewegliche Element 18 in seine geschlossene Position (siehe durchgezogene Linie) verlagert, welcher die mit durchgezogenen Linien dargestellte Ausrichtung der Stellvorrichtung 12 zugehörig ist.

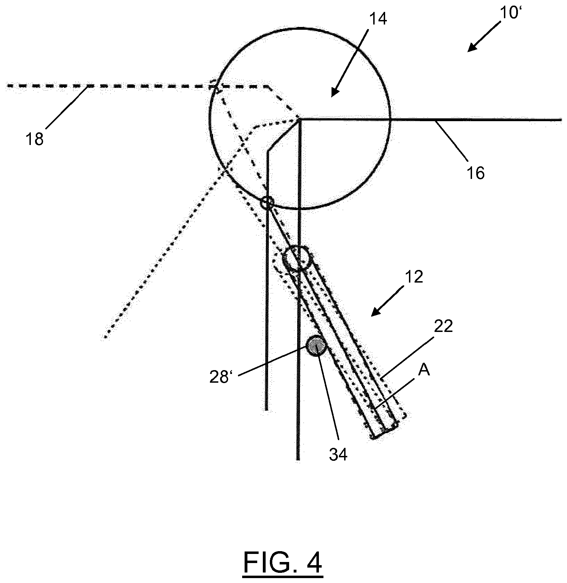

Wie in Figur 3 zu erkennen ist, folgt die Gelenkverbindung 26 einer Kreisbahn 32, welche das Gelenk 20 als Mittelpunkt und einen dem Abstand der Gelenkverbindung 26 zu dem Gelenk 20 entsprechenden Radius aufweist. Figur 4 zeigt eine zu Figur 3 analoge Darstellung einer Anordnung 10', welche sich von der Anordnung 10 lediglich in der Position der Verbindungseinheit 28' relativ zu der Antriebsbaugruppe 22 unterscheidet, so dass in Bezug auf eine Beschreibung der Anordnung 10'auf die Beschreibung der Anordnung 10 verwiesen werden kann. Dabei sind analoge Teile der Anordnung 10' mit gleichen Bezugszeichen versehen wie bei der Anordnung 10.

In dem in Figur 4 dargestellten Beispiel ist die Verbindungseinheit 28' in etwa mittig zu der Länge der Antriebsbaugruppe 22 angeordnet. Die Verbindungseinheiten 28' ist derart auf einer Seite der Antriebsbaugruppe 22 angeordnet, dass die Stellvorrichtung 12 relativ zu dem Grundelement 16 eine Schwenkachse 34 aufweist, welche im Wesentlichen rechtwinklig und windschief zu der Verstellachse A des Stellelements 24 verläuft. In dem in Figur 4 gezeigten Beispiel verläuft die Schwenkachse 34 zudem senkrecht zur Blattebene.

Durch die in Figur 4 gezeigte Anordnung der Stellvorrichtung 12 an der übergeordneten Baugruppe 14 ergibt sich eine geringere Verlagerung des freien Endes der Antriebsbaugruppe 22 bei einer Verlagerung des beweglichen Elements 18 relativ zu dem Grundelement 16.

Nachzutragen ist, dass wenigstens eine der beiden Verbindungseinheiten als Gleitverbindung in Form von "Stift und Buchse" ausgelegt sein kann, wobei frei gewählt werden kann, welches aus Stift und Buchse an der Antriebsbaugruppe 22 angebracht sein soll. Natürlich kann wenigstens eine der beiden Verbindungseinheiten auch ein Kugellager, Wälzlager oder eine andere denkbare Lagerung umfassen.

## Patentansprüche

1. Stellvorrichtung (12) für ein relativ zu einer Karosserie (16) eines Fahrzeugs bewegbares Fahrzeugteil (18), insbesondere für eine Fahrzeugtür oder eine Fahrzeugklappe, umfassend
• eine Antriebsbaugruppe (22) mit einer Antriebseinheit (23) und mit einer Verbindungseinheit (28), welche zur Verbindung der Antriebsbaugruppe (22) mit einer übergeordneten, d.h. nicht zur Stellvorrichtung (12) gehörenden, Baugruppe, nämlich entweder der Karosserie (16) des Fahrzeugs oder dem bewegbaren Fahrzeugteil (18), ausgelegt ist, und
• ein Stellelement (24), welches mittels der Antriebseinheit (23) relativ zur Antriebsbaugruppe (22) entlang einer Verstellachse (A) axial verlagerbar ist, so dass ein freies Ende des Stellelements (24) von der Antriebsbaugruppe (22) weg oder auf diese zu verlagerbar ist, und welches an seinem freien Ende eine weitere Verbindungseinheit (26) umfasst, welche zur Verbindung des Stellelements (24) mit einer übergeordneten, d.h. nicht zur Stellvorrichtung gehörenden, Baugruppe, nämlich entweder dem bewegbaren Fahrzeugteil (18) oder der Karosserie (16) des Fahrzeugs, ausgelegt ist,
wobei die Antriebsbaugruppe (22) ein Ende, an welchem diese mit dem Stellelement (24) zusammenwirkt bzw. an welchem das Stellelement (24) aus der Antriebsbaugruppe (22) austritt und ein diesem Ende entgegengesetztes freies Ende aufweist,
wobei die eine Verbindungseinheit (28) an einer von dem freien Ende der Antriebsbaugruppe (22) entfernt gelegenen Stelle mit der Antriebsbaugruppe (22) verbunden ist, **dadurch gekennzeichnet, dass**
eine Schwenkachse (30) der einen Verbindungseinheit (28), um welche die Antriebsbaugruppe (22) relativ zu der übergeordneten Baugruppe verlagerbar ist, zur Verstellachse (A) des Stellelements (24) windschief verläuft, wobei
die eine Verbindungseinheit (28) mit der Antriebsbaugruppe (22) stoffschlüssig verbunden, beispielsweise verschweißt oder verklebt, oder mit dieser einstückig ausgebildet ist.

2. Stellvorrichtung (12) nach Anspruch 1,
**dadurch gekennzeichnet, dass** die eine Verbindungseinheit (28) an jenem Ende der Antriebsbaugruppe (22) angeordnet ist, an welchem diese mit dem Stellelement (24) zusammenwirkt.

3. Stellvorrichtung (12) nach Anspruch 1 oder 2,
**dadurch gekennzeichnet, dass** die Stellvorrichtung (12) als Spindeltrieb ausgebildet ist.

4. Verwendung einer Stellvorrichtung (12) nach einem der Ansprüche 1 bis 3 zum Verstellen eines bewegbaren Fahrzeugteils (18), insbesondere einer Fahrzeugtür oder einer Fahrzeugklappe, relativ zur Karosserie (16) des Fahrzeugs.

## Claims

1. Adjusting device (12) for a vehicle part (18) that is movable relative to a body (16) of a vehicle, in particular for a vehicle door or a vehicle panel, comprising
- a drive assembly (22) comprising a drive unit (23) and a connecting unit (28) which is designed to connect the drive assembly (22) to a superordinate assembly, i.e. an assembly that is not part of the adjusting device (12), namely either the body (16) of the vehicle or the movable vehicle part (18), and
- an adjusting element (24), which can be displaced axially relative to the drive assembly (22) along an adjustment axis (A) by means of the drive unit (23), such that a free end of the adjusting element (24) can be displaced away from the drive assembly (22) or towards it, and which comprises, at the free end thereof, an additional connecting unit (26) which is designed to connect the adjusting element (24) to a superordinate assembly, i.e. an assembly that is not part of the adjusting device, namely either the movable vehicle part (18) or the body (16) of the vehicle,
wherein the drive assembly (22) has one end, on which it cooperates with the adjustment element (24) or on which the adjustment element (24) exits the drive assembly (22), and one free and opposite said one end,
wherein the one connecting unit (28) is connected to the drive assembly (22) at a point that is remote from the free end of the drive assembly (22),
**characterised in that** a pivot axis (30) of the one connection unit (28), around which the drive assembly (22) is displaceable relative to the superordinate assembly, is skewed relative to the adjustment axis (A) of the adjusting element (24),
wherein the one connection unit (28) is integrally connected to the drive assembly (22), for example welded or bonded, or is formed in one piece therewith.

2. Adjusting device (12) according to claim 1, **characterised in that** one connecting unit (28) is arranged at the end of the drive assembly (22) at which said drive assembly interacts with the adjusting element (24).

3. Adjusting device (12) according to claims 1 or 2, **characterised in that** the adjusting device (12) is formed as a spindle drive.

4. Use of an adjusting device (12) according to any of claims 1 to 3 for adjusting a movable vehicle part (18), in particular a vehicle door or a vehicle panel, relative to the body (16) of the vehicle.

## Revendications

1. Dispositif de réglage (12) pour une partie du véhicule (18) mobile par rapport à une carrosserie (16) d'un véhicule, en particulier pour une porte de véhicule ou une trappe de véhicule, comprenant
• un module d'entraînement (22) avec une unité d'entraînement (23) et avec une unité de liaison (28), qui est conçue pour relier le module d'entraînement (22) à un module supérieur, c'est-à-dire n'appartenant pas au dispositif de réglage (12), à savoir soit la carrosserie (16) du véhicule, soit la partie mobile du véhicule (18), et
• un élément de réglage (24) qui peut être déplacé axialement au moyen de l'unité d'entraînement (23) par rapport au module d'entraînement (22) le long d'un axe de réglage (A), de sorte qu'une extrémité libre de l'élément de réglage (24) peut être éloignée du module d'entraînement (22) ou déplacée vers celui-ci, et qui comprend à son extrémité libre une autre unité de liaison (26) qui est destinée à relier l'élément de réglage (24) à un module d'entraînement supérieur, c'est-à-dire qui n'appartient pas au dispositif de réglage, à savoir soit la partie mobile du véhicule (18), soit la carrosserie (16) du véhicule,
dans lequel le module d'entraînement (22) présente une extrémité à laquelle celui-ci coopère avec l'élément de réglage (24) ou à laquelle l'élément de réglage (24) sort du module d'entraînement (22) et une extrémité libre opposée à cette extrémité,
dans lequel ladite une unité de liaison (28) est reliée au module d'entraînement (22) en un point éloigné de l'extrémité libre du module d'entraînement (22), **caractérisé en ce qu'**un axe de pivotement (30) de ladite une unité de liaison (28), autour duquel le module d'entraînement (22) peut être déplacé par rapport au module supérieur, s'étend en oblique par rapport à l'axe de réglage (A) de l'élément de réglage (24), dans lequel ladite une des unités de liaison (28) est reliée au module d'entraînement (22) par liaison de matière, par exemple par soudage ou par collage, ou est réalisée d'une seule pièce avec celui-ci.

2. Dispositif de réglage (12) selon la revendication 1, **caractérisé en ce que** ladite une unité de liaison (28) est disposée à l'extrémité du module d'entraînement (22) à laquelle celui-ci coopère avec l'élément de réglage (24).

3. Dispositif de réglage (12) selon la revendication 1 ou 2, **caractérisé en ce que** le dispositif de réglage (12) est conçu comme un entraînement à broche.

4. Utilisation d'un dispositif de réglage (12) selon l'une des revendications 1 à 3 pour le réglage d'une partie mobile du véhicule (18), en particulier d'une porte de véhicule ou d'une trappe de véhicule, par rapport à la carrosserie (16) du véhicule.
